# EUROPÄISCHE PATENTSCHRIFT

(11) **EP 1 374 186 B1**
(45) Veröffentlichungstag und Bekanntmachung des Hinweises auf die Patenterteilung: **07.05.2008**
(21) Anmeldenummer: 02712791.9
(22) Anmeldetag: 20.02.2002
(51) Int. Cl.: G07C 5/08

(54) **AUFNAHMEVORRICHTUNG FÜR IN FAHRZEUGEN VERWENDETE, DER PERSONENBEZOGENEN ERFASSUNG VON FAHRTDATEN DIENENDE CHIPKARTEN**
HOLDING DEVICE FOR CHIP CARDS USED IN VEHICLES FOR RECORDING PERSON-SPECIFIC TRIP DATA
DISPOSITIF DE LOGEMENT POUR CARTES A PUCE UTILISEES DANS DES VEHICULES ET SERVANT A LA SAISIE RELATIVE A DES PERSONNES DE DONNEES DE PARCOURS

(30) Priorität: 14.03.2001 DE 10112061
(43) Veröffentlichungstag der Anmeldung: 02.01.2004
(73) Patentinhaber: VDO Automotive AG, 93055 Regensburg (DE)
(72) Erfinder: BENZING, Kurt, 78056 Villingen-Schwenningen (DE); HUG, Klaus, 78727 Oberndorf (DE); KLOSTERMEIER, Dieter, 78050 Villingen-Schwenningen (DE); LINDINGER, Andreas, 78658 Flötzlingen (DE); SCHUBERT, Christoph, 78628 Rottweil (DE)
(86) Internationale Anmeldenummer: PCT/DE2002/000604
(87) Internationale Veröffentlichungsnummer: WO 2002/073543

(56) Entgegenhaltungen:
- EP-A- 0 899 676
- US-A- 4 644 368
- PATENT ABSTRACTS OF JAPAN vol. 1998, no. 04, 31. März 1998 (1998-03-31) -& JP 09 319839 A (OKI ELECTRIC IND CO LTD), 12. Dezember 1997 (1997-12-12)

## Beschreibung

Die Erfindung betrifft eine Aufnahmevorrichtung für in Fahrzeugen verwendete, der personenbezogenen Erfassung von Fahrtdaten dienende Chipkarten mit einem die Chipkarten zwischen einer Entnahmeposition und einer Lese-/Schreibposition führenden Kartenhalter und mit Ausgabemitteln, wobei die Ausgabemittel nach dem Betätigen eines Anforderungselementes einen Transport einer in der Lese-/Schreibposition befindlichen Chipkarte in die Entnahmeposition bewirken.

Eine solche Aufnahmevorrichtung ist aus Dokument US 4644368 bekannt, bei welcher die in einem Speicher der Aufnahmevorrichtung gespeicherten Fahrdaten nach der Betätigung einer der Aufnahmevorrichtung zugeordneten Auswurftaste durch den Benutzer zuerst in den Speicher der Chipkarte eingeschrieben werden, bevor die Chipkarte an den Benutzer zurückgegeben wird.

Die Erfassung insbesondere von Arbeits- und Ruhezeiten der Fahrer von Nutzfahrzeugen erfordert wegen des dokumentarischen Wertes dieser Daten zuverlässige Sicherungen zur Vermeidung von in betrügerischer Absicht erfolgenden Störungen, beispielsweise durch kurzzeitiges Ziehen einer Chipkarte während der Datenübertragung zwischen dem Datenerfassungsgerät und der Chipkarte oder dadurch, dass Folien oder elektrisch leitendes Material in die Aufnahmevorrichtung der Chipkarten eingeführt werden. Auf der anderen Seite besteht die Gefahr von Funktionsstörungen aufgrund der im Einsatzmilieu eines Nutzfahrzeuges gegebenen erheblichen klimatischen Schwankungen und demzufolge temperatur- und feuchtigkeitsbedingten Materialveränderungen aber auch aufgrund des beim Betrieb eines Nutzfahrzeuges gegebenen Schwingungspegels und fahrtbedingter Erschütterungen. Diese mechanischen Schwingungen können beispielsweise zu einem raschen Kontaktverschleiß, das heißt einem vollständigen Durchscheuern der relativ dünnen, als Goldplättchen ausgebildeten Flächenkontakte der Chipkarten, führen, wenn Relativbewegungen zwischen einer in der Lese-/Schreibposition befindlichen Chipkarte und dem der Chipkarte zugeordneten Lese-/Schreibkontaktsatz möglich sind.

Aufgrund der fahrzeugbezogenen Anwendung ist bezüglich der Herstellung und Montage einer Aufnahmevorrichtung für die Chipkarten grundsätzlich davon auszugehen, dass großseriengerechte Toleranzen vorgesehen werden und sich je nach Toleranzlage eine mehr oder weniger große Schwingungsempfindlichkeit zwischen einer Chipkarte und den aufliegenden Lese-/Schreibkontakten einstellt. Erhebliche Toleranzadditionen sind insbesondere dann in Kauf zu nehmen, wenn die Aufnahmevorrichtung für die Chipkarten nicht als funktionsfertiges autonomes Aggregat hergestellt wird, sondern der Kartenhalter und der Lese-/Schreibkontaktsatz voneinander getrennt montiert werden, beispielsweise an einer Leiterplatte eines als Datenerfassungsgerät dienenden Fahrtschreibers. Hinzu kommt, dass die Ebenheit von Leiterplatten toleranzbehaftet ist und klimabedingten Schwankungen unterliegt und dass die Chipkarten relativ große Dickenunterschiede aufweisen und verbogen sein können.

Die Aufgabe der vorliegenden Erfindung bestand somit darin, eine Aufnahmevorrichtung zu schaffen, in welcher trotz der für den Nutzfahrzeugeinsatz notwendigen Serientauglichkeit und Robustheit sowie der erforderlichen Manipulationssicherheit ein schwingungs- und erschütterungsbedingter Verschleiß der Plattenkontakte der Chipkarten weitgehend reduziert ist.

Die Lösung der gestellten Aufgabe ist dadurch gekennzeichnet, dass der Aufnahmevorrichtung eine Einrichtung zugeordnet ist, welche nach einem Eingeben einer Chipkarte in die Lese-/Schreibposition und nach einem Auslesen von Daten der eingegebenen Chipkarte die Federkontakte eines Lese-/Schreibkontaktsatzes von den Plattenkontakten der Chipkarte trennt, wenigstens nach einem Betätigen des Anforderungselementes die Federkontakte des Lese-/Schreibkontaktsatzes und die Plattenkontakte der eingegebenen Chipkarte schließt und nach einem Einschreiben von zwischenzeitlich in einem von der Chipkarte unabhängigen Speicher gesammelten Fahrtdaten in die Chipkarte ein Freigeben der Ausgabemittel auslöst.

Ein bevorzugtes Ausführungsbeispiel sieht vor, dass das Eingeben und Ausgeben von Chipkarten selbsttätig erfolgt, wobei ein motorisch betätigtes Transportmittel in den Bewegungsraum der Chipkarten eingreift, dass der Transportweg der Chipkarten innerhalb der Aufnahmevorrichtung größer ist als die Länge einer Chipkarte und dass außer ein Vorstecken und Entnehmen sowie das Erreichen der Lese-/Schreibposition einer Chipkarte meldende Schalter wenigstens ein weiterer Schalter vorgesehen ist, welcher beim Verschieben einer Chipkarte in Ausgaberichtung ein Trennen der Plattenkontakte der Chipkarte von den Federkontakten des Lese- /Schreibkontaktsatzes bei noch nicht erreichter Entnahmeposition meldet.

Ein spezielles, für eine Aufnahmevorrichtung, welche gegenüber dem bevorzugten Ausführungsbeispiel einen geringeren Transportweg aufweist, geeignetes Ausführungsbeispiel zeichnet sich dadurch aus, dass der Kartenhalter und der Lese-/Schreibkontaktsatz an ein und demselben Träger befestigt sind und dass die Federkontakte des Lese-/Schreibkontaktsatzes mittels einer Hilfskraft rechtwinklig zu einer in der Lese-/Schreibposition befindlichen Chipkarte anheb- oder absenkbar sind, insbesondere dass ein die freien Enden der Federkontakte des Lese-/Schreibkontaktsatzes verbindendes Betätigungselement vorgesehen ist und dass dem Lese-/Schreibkontaktsatz ein an einer Leiterplatte befestigter Elektromagnet zugeordnet ist derart, dass der Anker des Elektromagneten mit dem Betätigungselement in Wirkverbindung steht.

Die Neuerung, deren Realisierung ein Verfahren einschließt, bei dem die Daten einer Chipkarte, wenn diese in die Aufnahmevorrichtung eingeführt ist, in einen Datenspeicher des Datenerfassungsgerätes eingelesen und in gewissen Zeitabständen, spätestens jedoch, wenn die Chipkarte ausgegeben werden soll, vor dem Ausgeben zwischenzeitlich erfasste Daten in den Datenspeicher der Chipkarte übertragen bzw. die Daten der Chipkarte aktualisiert werden, ermöglicht es, dass die Kontakte von Chipkarte und Schreib-/Lesekontaktsatz nur dann geschlossen sind, wenn Daten übertragen werden. Dies bedeutet, dass in der übrigen Verweildauer einer Chipkarte in der Aufnahmevorrichtung die Kontakte getrennt sind und somit eine schwingungsbedingte Abnutzung der Plattenkontakte der Chipkarten nicht möglich ist. Gleichzeitig wird durch die Erfindung gewährleistet, dass auch bei getrennten Kontakten eine Chipkarte und/oder die Aufnahmevorrichtung vor Manipulationen geschützt sind.

Den geringsten Aufwand zur Vermeidung der schwingungsbedingten Kontaktabnutzung bietet das bevorzugte Ausführungsbeispiel. Bei diesem ist, unter der Voraussetzung, dass in der Aufnahmevorrichtung in Transportrichtung der Chipkarten ein ausreichender Transportweg, der größer ist als die Länge einer Chipkarte, zur Verfügung steht, lediglich eine zweite, die Parkposition der Chipkarte meldende Lichtschranke erforderlich.

Eine andere Bauform der Aufnahmevorrichtung, bei der ein ausreichender Transportweg für ein Außereingriffbringen der Kontakte bei unzugänglicher Chipkarte nicht gegeben ist, macht eine Relativbewegung zwischen dem Lese-/Schreibkontaktsatz oder lediglich dessen Federkontakte und dem Kartenhalter erforderlich. Vorzugsweise wird in diesem Falle der Lese-/Schreibkontaktsatz unmittelbar an einen Träger, beispielsweise einer Leiterplatte angebracht, an welcher auch der Kartenhalter angeordnet ist. Bei dem betreffenden, speziellen Ausführungsbeispiel sind die freien Enden der Federkontakte des Lese-/Schreibkontaktsatzes in einem Betätigungselement gehaltert, welches mit dem Anker eines Elektromagneten in Wirkverbindung steht. Letzterer kann ebenfalls unmittelbar an der Leiterplatte montiert und mit entsprechenden Leiterbahnen kontaktiert sein, und zwar auf der Gegenseite des Lese-/Schreibkontaktsatzes. Vorzugsweise ist der Elektromagnet derart ausgelegt, dass beim Bestromen der Spulenwicklung der Anker des Elektromagneten auf das Betätigungselement einwirkt und somit ein Schließen der Kontakte von Chipkarte und Lese-/Schreibkontaktsatz erfolgt, das heißt, das Betätigungselement und der Anker können als voneinander unabhängige Bauelemente in der jeweiligen Baueinheit angeordnet sein.

Im folgenden sei die Erfindung anhand von Zeichnungen näher erläutert. Es zeigen:
- Figur 1: eine Frontansicht eines Fahrtschreibers,
- Figur 2: eine als autonomes Aggregat ausgebildete Aufnahmevorrichtung in perspektivischer Darstellung,
- Figur 3: einen Schnitt gemäß der Schnittlinie A in Figur 2, wobei eine in die Aufnahmevorrichtung eingegebene Chipkarte sich in der Lese-/Schreibposition befindet,
- Figur 4: eine Darstellung gemäß Figur 3, bei der sich die Chipkarte in einer Parkposition befindet, in der die Kontakte von Chipkarte und Lese-/Schreibkontaktsatz getrennt sind, die Aufnahmevorrichtung aber unzugänglich verschlossen ist,
- Figur 5: eine weitgehend schematische Schnittdarstellung einer Anordnung zum Schließen der Kontakte von Chipkarte und Lese-/Schreibkontaktsatz für eine Aufnahmevorrichtung, bei der im verriegelten Zustand eine Transportbewegung einer Chipkarte nicht möglich ist.

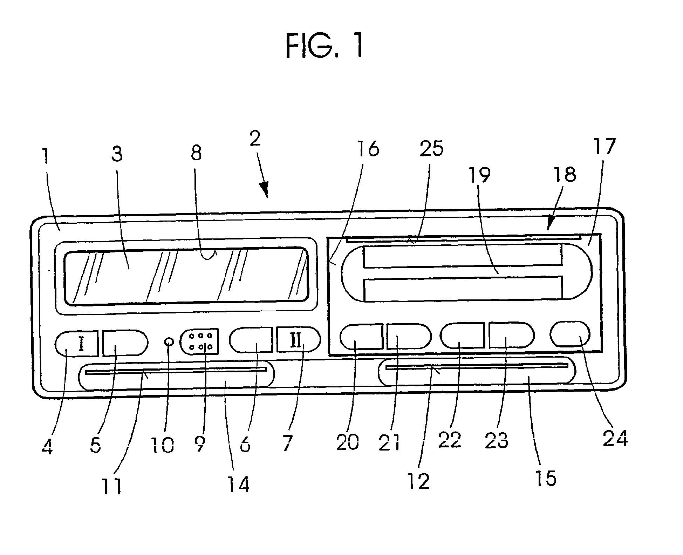

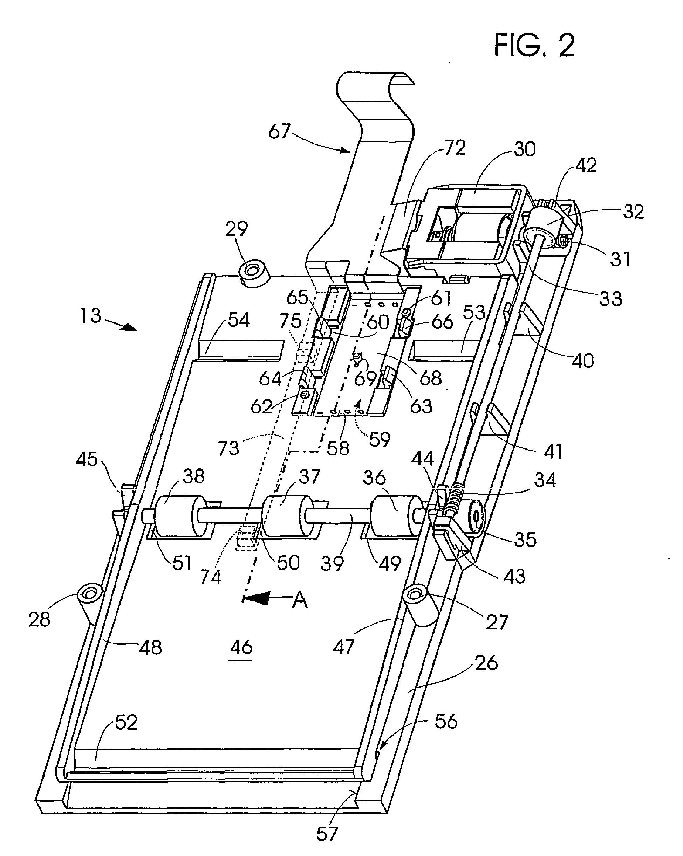

In Figur 1 ist mit 1 eine Blende bzw. eine Frontwand des betreffenden Fahrtschreibers 2 bezeichnet, die ein sich rechtwinklig zur Blattebene erstreckendes, in Figur 1 nicht sichtbares Gehäuse rechteckförmigen Querschnitts frontseitig abschließt. In der Frontwand 1 sind eine Anzeigevorrichtung 3 gehaltert sowie Tasten 4, 5 und 6, 7 geführt, Dabei dienen die Tasten 4 (I) und 7 (II) dem Anmelden von Fahrer und Beifahrer, die Tasten 5 und 6 dem Anfordern der jeweiligen Fahrer und Beifahrer zugeordneten Chipkarten. Mit 8 ist ein in der Frontwand 1 ausgebildeter, der Beobachtung dienender Fensterausschnitt bezeichnet. Eine gefedert gelagerte Abdeckung 9 deckt eine Steckerfassung ab; 10 stellt eine Warnlampe dar. Schlitze 11 und 12 dienen dem Eingeben der Chipkarten von Fahrer und Beifahrer in geeignete Aufnahmevorrichtungen des Fahrtschreibers 2, von denen eine als Figur 2 dargestellt und mit 13 bezeichnet ist. Die Schlitze 11, 12 sind, wie die Figur 1 ferner zeigt, im Grunde von jeweils trichterförmigen Senkungen 14 und 1 5 ausgebildet. Ferner ist in der Frontwand 1 eine Aussparung 16 vorgesehen, welche von einem Frontelement 17 einer Druckvorrichtung 18 abgedeckt ist, und zwar derart, dass sich das Frontelement 17 gestalterisch, insbesondere flächenbündig, in die Frontfläche der Frontwand 1 des Fahrtschreibers 2 einfügt.

Der Vollständigkeit halber sei erwähnt, dass die Druckvorrichtung 18 einen Schlitten umfasst, mittels dessen sie aus dem Fahrtschreiber 2 herausbewegbar ist. Dem Schlitten kann ein bistabiles Rastgetriebe zugeordnet sein, welches, im Falle dass Aufzeichnungsmaterial nachgefüllt werden soll, durch Betätigen des Frontelements 17, das somit als Taste dient, ent- und verriegelbar ist. Außerdem sind in dem Frontelement 1 7, das mit einer Griffleiste 19 versehen ist, mehrere Tasten 20, 21 und 22, 23 sowie 24 gelagert. Diese dienen zusammen mit den Tasten 4 und 7 dem Anwählen der wichtigsten Arbeitszeitdaten von Fahrer und Beifahrer, dem Vorwärts- und Rückwärtsblättern in den jeweiligen Datensätzen einer angewählten Datenart und der Druckauslösung. Mit 25 ist eine Auslassöffnung für das bedruckte Aufzeichnungsmaterial bezeichnet.

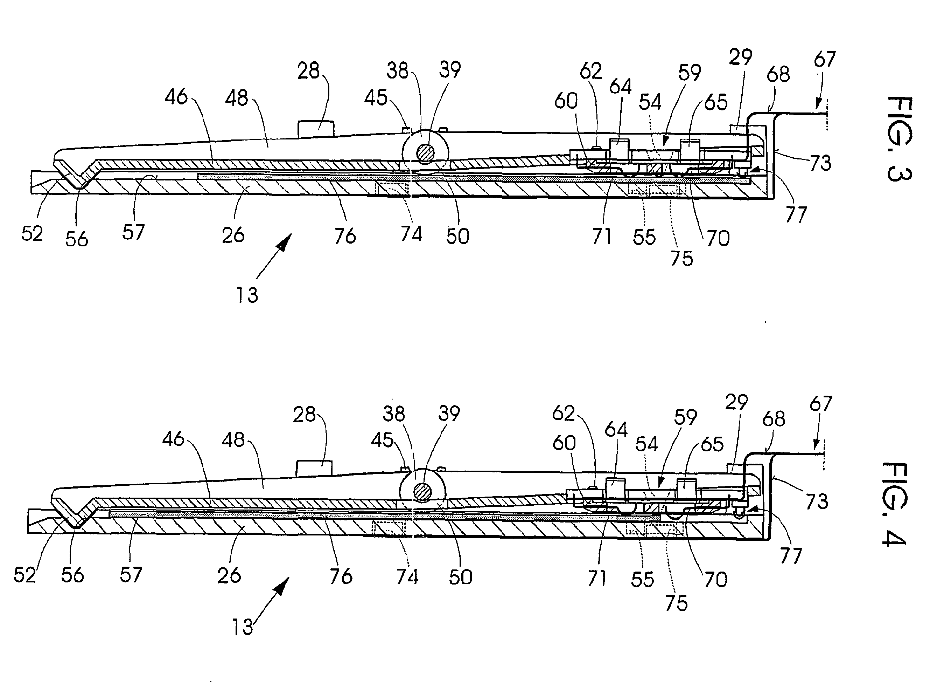

Die mit der Figur 2 dargestellte Aufnahmevorrichtung 13 weist einen plattenförmigen Kartenhalter 26 auf, an welchem mit nicht näher bezeichneten Gewindebohrungen versehene Abstandsbolzen 27, 28 und 29 zum Anflanschen der Aufnahmevorrichtung 13 am Einbauort, in diesem Falle an einer Leiterplatte des Fahrtschreibers 2, angeformt sind. Mit 30 ist ein Antriebsmotor, vorzugsweise ein Gleichstrommotor bezeichnet, welcher über eine auf dessen Welle angeordnete Schnecke 31 mit einem schrägverzahnten Stirnrad 32 in Eingriff steht. Letzteres ist auf einer Verbindungswelle 33 befestigt, die auf dem Kartenhalter 26 gelagert ist und über eine Schnecke 34 mit einem Zahnrad 35 kämmt, welches ebenfalls ais schrägverzahntes Stirnrad ausgebildet ist und mit einer mehrere Friktionselemente 36, 37 und 38 tragenden Transportwelle 39 verdrehfest verbunden ist. Mit 40, 41, 42 und 43 sind am Kartenhalter 26 angeformte, der Verbindungswelle 33 zugeordnete Stützpfeiler und Lagerarme bezeichnet. Die Transportwelle 39 ist in ebenfalls am Kartenhalter 26 ausgebildeten Lagerschenkeln 44 und 45 gelagert. Auf der anderen Seite dient die Transportwelle 39 einer Wippe 46 als Lagerachse. Die Wippe 46, die als plattenförmiger mit Seitenwangen 47 und 48 versehener Körper ausgebildet ist, weist zum Durchgreifen der Friktionselemente 36, 37, 38 in den Bewegungsraum der Chipkarten Durchbrüche 49, 50 und 51 auf und ist einerseits mit einem unmittelbar angeformten Schließelement 52 sowie mit Tastelementen 53 und 54 versehen. Letzteren sind im Kartenhalter 26 ausgebildete Freisparungen 55 zugeordnet; das Schließelement 52 wirkt mit einer dem Schließelement 52 entsprechenden Nut 56 zusammen. Mit 57 ist eine in dem Kartenhalter 26 freigesparte, der Führung der Chipkarten dienende Fassung bezeichnet. Wie ferner noch aus der Figur 2 ersichtlich ist, ist in der Wippe 46 eine Aussparung 58 vorgesehen, in welche ein Lese-/Schreibkontaktsatz 59 von der den Datenkarten zugeordneten Seite der Wippe 46 her einsetzbar ist. Dabei dienen zwischen einem Rahmen 60 des Lese-/Schreibkontaktsatzes 59 und der Wippe 46 ausgebildete Zapfenverbindungen 61 und 62 der Ausrichtung des Lese-/Schreibkontaktsatzes 59 und an dem Rahmen 60 angeformte Rastklinken 63, 64, 65 und 66 der Verriegelung des Lese-/Schreibkontaktsatzes 59 auf der Wippe 46. Ein mit dem Lese-/Schreibkontaktsatz 59 verbundener Abschnitt einer flexiblen Leiterbahn 67 ist mit 68 bezeichnet; ein Zentrierstift 69 dient der Ausrichtung des Leiterbahnabschnitts 68 vor dessen Verlöten mit den einzelnen als Blattfedern ausgebildeten Federkontakten des Lese-/Schreibkontaktsatzes 59, von denen in den Figuren 3 und 4 zwei dargestellt und mit 70 und 71 bezeichnet sind. Ein weiterer Leiterbahnabschnitt 72 dient der elektrischen Verbindung des Antriebsmotors 30. Mit 73 ist ein Leiterbahnband bezeichnet, auf welchem Reflexlichtschranken 74 und 75 kontaktiert sind. Das Leiterbahnband 73 ist, wie die Figuren 3 und 4 zeigen, an der Unterseite des Kartenhalters 26 befestigt; den Reflexlichtschranken 74, 75 sind im Kartenhalter 26 geeignete nicht näher bezeichnete Durchbrüche zugeordnet. Der Vollständigkeit halber sei noch erwähnt, dass nicht zwingend notwendig aber zweckmäßigerweise der Wippe 46 beispielsweise Blattfedern zugeordnet werden, die an dem Kartenhalter 26 befestigt sind und derart auf die Wippe 46 einwirken, dass auch bei einem nicht mit einer Chipkarte belegten Kartenhalter 26 das Schließelement 52 sich stets in Eingriff mit der Nut 56 befindet und auf diese Weise eine Dichtfunktion ausübt. Ist in diesem Zustand der Aufnahmevorrichtung eine Chipkarte 76 durch einen der vororientierenden Schlitze 11 oder 12 in der Frontwand 1 in den Fahrtschreiber 2 eingeführt und von Hand bis zu den Friktionselementen 36, 37, 38 der Transportwelle 39 vorgesteckt worden, so wurde die Wippe 46 aufgrund der keilgetrieblichen Wirkung zwischen dem Schließelement 52 und der Chipkarte 76 angehoben und um die Transportwelle 39 verschwenkt und eine Schaltfunktion der Reflexlichtschranke 74 ausgelöst, die den Antriebsmotor 30 ansteuert. Dadurch wird die Transportwelle 39 angetrieben und es erfolgt ein weiterer, und zwar selbstätiger Transport der Chipkarte 76 bis zur Begrenzung der Fassung 57 bzw. bis zum Abschalten des Antriebsmotors 30 durch einen Schalter 77, der das Erreichen der Lese-/Schreibposition einer Chipkarte 76 meldet und baulich vorzugsweise in dem Rahmen 60 des Lese-/Schreibkontaktsatzes angeordnet ist. Während des Transports der Chipkarte 76 in die Lese-/Schreibposition ist die Wippe 46 entweder aufgrund der erwähnten, jedoch nicht dargestellten Blattfedern oder aber im Zusammenwirken mit den Tastelementen 53, 54 in die Schließstellung zurückgeschwenkt und, wie aus der Schnittdarstellung, Figur 3, ersichtlich ist, infolge des geringen Spiels zwischen der Chipkarte 76 und den Tastelementen 53, 54 in dieser Position selbsttätig verriegelt worden. Nach dem Positionieren der Chipkarte 76 in der Lese-/Schreibposition erfolgt ein Prüfvorgang und ein Auslesen der in der Chipkarte 76 gespeicherten Daten.

Erfindungsgemäß wird nachfolgend die Chipkarte 76 verschoben, das heißt der Antriebsmotor 30 und somit die Transportwelle 39 werden programmabhängig auf Ausgeben der Chipkarte 76 angesteuert. Der Transport der Chipkarte 76 in Ausgaberichtung wird gestoppt sobald eine Zustandsänderung der Reflexlichtschranke 75 eintritt. In der dann erreichten Parkposition sind, wie die Figur 4 zeigt, die Kontakte des Lese-/Schließkontaktsatzes 59 von den Kontakten der Chipkarten 76 getrennt, die Wippe 46 bleibt aber verriegelt. Spätestens dann, wenn eine der Tasten 5 oder 6 betätigt wird und die Chipkarte 76 ausgegeben werden soll, wird die Chipkarte 76 zunächst wieder in die Lese-/Schreibposition transportiert und die Daten der Chipkarte 76 werden entsprechend den zwischenzeitlich im geräteinternen Speicher des Fahrtschreibers 2 gesammelten fahrtabhängigen Daten und Ereignisse aktualisiert. Danach erfolgt, ebenfalls programmgesteuert, der Transport der Chipkarte 76 in die Entnahmeposition, wo sie von Hand entnommen werden kann und dabei ein Signal der Reflexlichtschranke 74 den Antriebsmotor 30 stillsetzt. Wird die Chipkarte 76 nicht gleich entnommen, so wird der Antriebsmotor 30 zeitgesteuert gestoppt.

Der Vollständigkeit halber sei noch nachgetragen, dass bei der Ausgabe der Chipkarte 76 die Reflexlichtschranke 75 wirkungslos ist und ein selbstätiges Verschwenken der Wippe 46 durch das Zusammenwirken des keilförmigen Schließelementes 56 mit der Chipkarte 76 bewirkt wird. Ferner sei erwähnt, dass es zweckmäßig ist, die Daten einer in der Aufnahmevorrichtung 13 befindlichen Chipkarte 76 öfters, beispielsweise beim Erreichen einer definierten Datenmenge, zu aktualisieren, damit die Ausgabe einer Chipkarte in kürzerer Zeit erfolgen kann. Stoßbedingte Verschiebungen der Chipkarte 76 sind insofern unkritisch, als programmgemäß geprüft wird, ob überhaupt noch eine Chipkarte 76 in der Aufnahmevorrichtung 13 vorhanden ist und, wenn dies der Fall ist, die erfindungsgemäße Datenlese- und Transportroutine innerhalb der Aufnahmevorrichtung 13 zwischen der Lese-/Schreibstation und der Parkposition, falls nötig, mehrmals wiederholt wird.

Bei anderen Bauformen der Aufnahmevorrichtung, die lediglich ein Vorstecken der Chipkarten von Hand gestatten oder ein selbstätiges Einziehen der Chipkarten über eine Distanz ermöglichen, die für ein Außereingriffbringen der Kontakte einer Chipkarte und des Lese-/Schreibkontaktsatzes durch Verschieben der Chipkarte nicht ausreicht, ist es denkbar, den Lese-/Schreibkontaktsatz als Schlitten auszubilden oder an einem Schlitten anzuordnen, welcher verschiebbar, und zwar nicht zwingend in Bewegungsrichtung der Chipkarten verschiebbar, an einem Träger gelagert ist, der die Leiterplatte eines Gerätes, beispielsweise eines Fahrtschreibers sein kann. Eine zweckmäßige Variante kann aber auch darin bestehen, dass der Lese-/Schreibkontaktsatz ortsfest angeordnet und dass der Kartenhalter schwenkbar gelagert ist, wobei der Kartenhalter mit einer motorisch betätigbaren Exzenterwelle in Eingriff stehen kann.

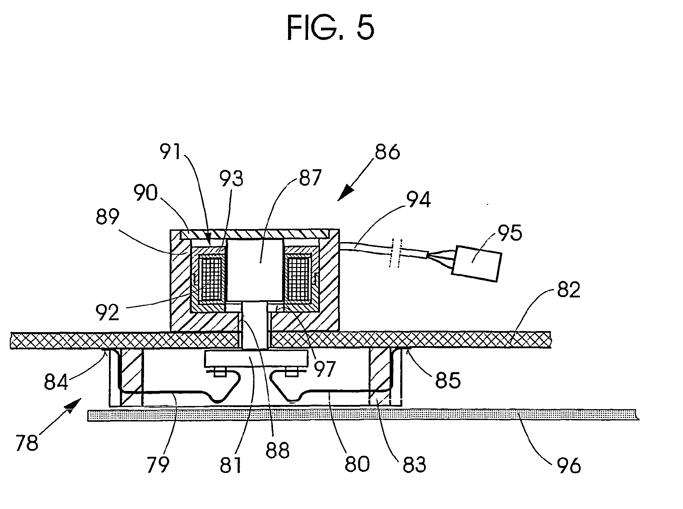

Mit der Figur 5 wird ein Ausführungsbeispiel vorgeschlagen, welches zum Trennen der Kontakte von Chipkarte und Lese-/Schreibkontaktsatz ein elektromagnetisch gesteuertes Schließen bzw. Trennen der Federkontakte des Lese-/Schreibkontaktsatzes und der Plattenkontakte einer Chipkarte vorsieht, und zwar rechtwinklig zur Bewegungsebene der Chipkarte. Hierzu sind die freien Enden der in einem Lese-/Schreibkontaktsatz 78 eingebetteten bzw. gefassten Federkontakte - in Figur 5 sind zwei von wenigstens sechs dargestellt und mit 79 und 80 bezeichnet - in einem Betätigungselement 81 gehaltert. Mit 82 ist ein Träger, beispielsweise eine Leiterplatte bezeichnet, an welcher der Lese-/Schreibkontaktsatz 78 befestigt ist, indem die in einem Rahmen 83 des Lese-/Schreibkontaktsatzes 78 gefassten Enden 84, 85 der Federkontakte 79, 80 mit Leiterbahnen der Leiterplatte 82 verlötet sind. Auf der Gegenseite der Leiterplatte 82 ist ein Elektromagnet 86 angeordnet, dessen für die erforderliche Hubbegrenzung gestuft ausgebildeter Anker 87 durch eine Öffnung 88 in der Leiterplatte 82 auf das Betätigungselement 81 durchgreift. Der Elektromagnet 86 besteht, wie aus der Figur 5 ferner ersichtlich ist, aus einem topförmigen Gehäuse 89, welches durch eine Deckelplatte 90 verschließbar ist, einem in das Gehäuse 89 eingesetzten zweiteiligen Rückschlußring 91 sowie einem die Wicklung 92 tragenden Spulenkörper 93. Die Anschlußleitungen 94 der Wicklung 92, die durch geeignete, in Figur 5 nicht dargestellte Öffnungen, in dem Rückschlußring 91 und in dem Gehäuse 89 durchgeführt sind, sind bei dem Ausführungsbeispiel gemäß Figur 5 mittels eines Steckers 95 abgeschlossen. Denkbar ist aber auch den Elektromagneten 86 derart auszubilden, dass er mit Anschlußfähnchen versehen SMD-bestück- und lötbar wird. Mit 96 ist eine Chipkarte bezeichnet, die sich in der Lese-/Schreibposition befindet.

Bei dem in der Figur 5 dargestellten Funktionszustand ist die Wicklung 92 des Elektromagneten 86 nicht bestromt, sodass der Anker 87 durch die vorzugsweise als Blattfedern ausgebildeten Federkontakte 79, 80 des Lese-/Schreibkontaktsatzes 78 von seinem Anschlag, dem Boden 97 des Gehäuses 89, abgehoben ist. Wird die Wicklung 92 bestromt, wirkt der Anker 87, der am Boden 97 des Gehäuses 89 anschlägt, auf das Betätigungselement 81 ein und bringt die Federkontakte 79, 80 in federnde Wirkverbindung mit den Plattenkontakten der Chipkarte 96. Die Lösung hat den Vorzug eines geringen Stromverbrauchs. Auf der anderen Seite würde es die ebenfalls denkbare umgekehrte Funktion, das heißt der Ruhestrombetrieb, der eine der festen Verbindung zwischen Anker 87und Betätigungselement 81 voraussetzt, ermöglichen, dass aufgrund der Wirkung einer geräteinternen Pufferbatterie auch noch bei Ausfall der Fahrzeugbatterie ein Einschreiben aufgelaufener Fahrtdaten in den Chipkartenspeicher erfolgen kann.

## Patentansprüche

1. Aufnahmevorrichtung (13) für in Fahrzeugen verwendete, der personenbezogenen Erfassung von Fahrtdaten dienende Chipkarten (76) mit einem die Chipkarten (76) zwischen einer Entnahmeposition und einer Lese-/Schreibposition führenden Kartenhalter (26) und mit Ausgabemitteln, wobei die Ausgabemittel nach dem Betätigen eines Anforderungselementes (5,6) einen Transport einer in der Lese-/Schreibposition befindlichen Chipkarte (76) in die Entnahmeposition bewirken,
**dadurch gekennzeichnet,**
**dass** der Aufnahmevorrichtung (13) eine Einrichtung zugeordnet ist, welche nach einem Eingeben einer Chipkarte (76) in die Lese-/Schreibposition und nach einem Auslesen von Daten der eingegebenen Chipkarte (76) die Federkontakte (70,71,79,80) eines Lese-/Schreibkontaktsatzes (59,78) von den Plattenkontakten der Chipkarte (76) trennt, wenigstens nach einem Betätigen des Anforderungselementes (5,6) die Federkontakte (70,71,79,80) des Lese-/Schreibkontaktsatzes (59,78) und die Plattenkontakte der eingegebenen Chipkarte (76) schließt und nach einem Einschreiben von zwischenzeitlich in einem von der Chipkarte (76) unabhängigen Speicher gesammelten Fahrtdaten in die Chipkarte (76) ein Freigeben der Ausgabemittel auslöst.

2. Aufnahmevorrichtung nach Anspruch 1,
**dadurch gekennzeichnet,**
**dass** das Eingeben und Ausgeben von Chipkarten (76) selbsttätig erfolgt, wobei ein motorisch betätigtes Transportmittel (36, 37, 38, 39) in den Bewegungsraum der Chipkarten (76) eingreift,
**dass** der Transportweg der Chipkarten (76) innerhalb der Aufnahmevorrichtung (13) größer ist als die Länge einer Chipkarte (76) und
**dass** außer ein Vorstecken und Entnehmen sowie das Erreichen der Lese-/Schreibposition einer Chipkarte (76) meldende Schalter (74, 77) wenigstens ein weiterer Schalter (75) vorgesehen ist, welcher beim Verschieben einer Chipkarte (76) in Ausgaberichtung ein Trennen der Plattenkontakte der Chipkarte (76) von den Federkontakten (70, 71) des Lese-/Schreibkontaktsatzes (59) bei noch nicht erreichter Entnahmeposition meldet.

3. Aufnahmevorrichtung nach Anspruch 1,
**dadurch gekennzeichnet,**
**dass** der Kartenhalter (26) in der Aufnahmevorrichtung (13) derart schwenkbar gelagert ist, dass die Plattenkontakte einer in der Lese-/Schreibposition befindlichen Chipkarte (76) von den Federkontakten (70,71,79,80) des ortsfest angeordneten Lese-/Schreibkontaktsatzes (59,78) trennbar sind.

4. Aufnahmevorrichtung nach Anspruch 3,
**dadurch gekennzeichnet,**
**dass** dem Kartenhalter (26) eine motorisch betätigte Exzenterwelle zugeordnet ist.

5. Aufnahmevorrichtung nach Anspruch 1,
**dadurch gekennzeichnet,**
**dass** der Lese-/Schreibkontaktsatz (59) relativ zum Kartenhalter (26) beweglich gelagert ist.

6. Aufnahmevorrichtung nach Anspruch 5,
**dadurch gekennzeichnet,**
**dass** der Lese-/Schreibkontaktsatz (59,78) an einem dem Kartenhalter (26) verschiebbar zugeordneten Schlitten befestigt ist.

7. Aufnahmevorrichtung nach Anspruch 1,
**dadurch gekennzeichnet,**
**dass** der Kartenhalter (26) und der Lese-/Schreibkontaktsatz (78) an ein und demselben Träger (82) befestigt sind und
**dass** die Federkontakte (79,80) des Lese-/Schreibkontaktsatzes (78) mittels einer Hilfskraft rechtwinklig zur einer in der Lese-/Schreibposition befindlichen Chipkarte (96) anheb- oder absenkbar sind.

8. Aufnahmevorrichtung nach Anspruch 7,
**dadurch gekennzeichnet,**
**dass** ein die freien Enden der Federkontakte (79, 80) des Lese-/Schreibkontaktsatzes (78) verbindendes Betätigungselement (81) vorgesehen ist und
**dass** dem Lese-/Schreibkontaktsatz (78) ein an einer Leiterplatte (82) befestigter Elektromagnet (86) zugeordnet ist derart,
**dass** der Anker (87) des Elektromagneten (86) mit dem Betätigungselement (81) in Wirkverbindung steht.

## Claims

1. Holding device (13) for chip cards (76) which are used in vehicles, have the purpose of person-related collection of travel data and which have a card holder (26) which guides the chip cards (76) between a removal position and a read/write position, and have output means, the output means bringing about, after the actuation of a request element (5, 6), transfer of a chip card (76) in the read/write position into the removal position, **characterized in that** the holding device (13) is assigned an apparatus which, after a chip card (76) has been input into the read/write position and after data has been read out from the input chip card (76), disconnects the spring contacts (70, 71, 79, 80) of a set of read/write contacts (59, 78) from the plate contacts of the chip card (76), closes the spring contacts (70, 71, 79, 80) of the set of read/write contacts (59, 78) after the request element (5, 6) has been actuated, and the plate contacts of the chip card (76) which has been input, and triggers a release of the output means after travel data which has been collected in the meantime in a memory which is independent of the chip card (76) has been written into the chip card (76).

2. Holding device according to claim 1, **characterized in that** the inputting and outputting of chip cards (76) take place automatically, a transfer means (36, 37, 38, 39) which is actuated by motor engaging in the movement space of the chip card (76), **in that** the transfer path of the chip card (76) within the holding device (13) is longer than the length of a chip card (76), and **in that**, apart from a switch (74, 77) which signals an insertion and removal as well as the reaching of the read/write position of a chip card (76) there is provided at least one further switch (75) which, when a chip card (76) is displaced in the output direction, signals disconnection of the plate contacts of the chip card (76) from the spring contacts (70, 71) of the set (59) of read/write contacts when the removal position has not yet been reached.

3. Holding device according to claim 1, **characterized in that** the card holder (26) is mounted in the holding device (13) so as to be pivotable in such a way that the plate contacts of a chip card (76) which is in the read/write position can be disconnected from the spring contacts (70, 71, 79, 80) of the fixedly arranged set of read/write contacts (59, 78).

4. Holding device according to claim 3, **characterized in that** a motor-actuated eccentric shaft is assigned to the card holder (26).

5. Holding device according to claim 1, **characterized in that** the set of read/write contacts (59) is mounted so as to be moveable relative to the card holder (26).

6. Holding device according to claim 5, **characterized in that** the set of read/write contacts (59, 78) is attached to a carriage which is displaceably assigned to the card holder (26).

7. Holding device according to claim 1, **characterized in that** the card holder (26) and the set of read/write contacts (78) are attached to one and the same carrier (82), and **in that** the spring contacts (79, 80) of the set of read/write contacts (78) can be raised or lowered at right angles to a chip card (76) in the read/write position by means of an auxiliary force.

8. The holding device according to claim 7, **characterized in that** an actuation element (81) which connects the free ends of the spring contacts (79, 80) of the set (78) of read/write contacts is provided, and **in that** an electromagnet (86) which is attached to a printed circuit board (82) is assigned to the set (78) of read/write contacts in such a way that the armature (87) of the electromagnet (86) is operatively connected to the actuation element (81).

## Revendications

1. Système de réception (13) pour cartes à puce (76) utilisées dans les véhicules et servant à l'enregistrement spécifique aux personnes de données relatives à la conduite, où ledit système de réception comporte un support de cartes (26) guidant les cartes à puce (76) entre une position de retrait et une position de lecture et écriture et des moyens de restitution qui, après actionnement d'un organe de sollicitation (5, 6), provoquent un transport d'une carte à puce (76), qui se trouve dans la position de lecture et écriture, vers la position de retrait,
**caractérisé par le fait**
**qu'**au dit système de réception (13) est affecté un dispositif qui, après l'insertion d'une carte à puce (76) dans la position de lecture et écriture et après la lecture des données de la carte à puce (76) insérée, écarte les contacts à ressort (70, 71, 79, 80) d'un jeu de contacts de lecture et écriture (59, 78) et les sépare des plaquettes de contact de la carte à puce (76), qui, au moins après un actionnement de l'organe de sollicitation (5, 6), ferme les contacts à ressort (70, 71, 79, 80) du jeu de contacts de lecture et écriture (59, 78) sur les plaquettes de contact de la carte à puce (76) insérée et qui, après le stockage sur la carte à puce (76) de données de conduite collectionnées entre-temps dans une mémoire indépendante de la carte à puce (76), déclenche une libération des moyens de restitution.

2. Système de réception selon la revendication 1,
**caractérisé par le fait**
**que** l'insertion et la restitution des cartes à puce (76) se font automatiquement, un moyen de transport (36, 37, 38, 39) actionné par moteur intervenant dans l'espace de déplacement des cartes à puce (76),
**que** la distance de transport des cartes à puce (76) à l'intérieur du système de réception (13) est supérieure à la longueur d'une carte à puce (76) et
**qu'**il est prévu, en plus d'un commutateur (74, 77) signalant l'insertion et le retrait, ainsi que l'atteinte de la position de lecture et écriture par une carte à puce (76), au moins un autre commutateur (75), qui signale, lors du déplacement d'une carte à puce (76) dans la direction de restitution, une séparation entre les plaquettes de contact de la carte à puce (76) et les contacts à ressort (70, 71) du jeu de contacts de lecture et écriture (59) lorsque la position de retrait n'est pas encore atteinte.

3. Système de réception selon la revendication 1,
**caractérisé par le fait**
**que** le support de carte (26) du système de réception (13) est suspendu en pivotement d'une manière telle que les plaquettes de contact d'une carte à puce (76) se trouvant dans la position de lecture et écriture peuvent être écartés des contacts à ressort (70, 71, 79, 80) du jeu de contacts de lecture et écriture (59, 78) placé à un endroit fixe.

4. Système de réception selon la revendication 3,
**caractérisé par le fait**
**qu'**un arbre à excentrique actionné par moteur est affecté au support de carte (26).

5. Système de réception selon la revendication 1,
**caractérisé par le fait**
**que** le jeu de contacts de lecture et écriture (59) est monté en pouvant se déplacer par rapport au support de carte (26).

6. Système de réception selon la revendication 5,
**caractérisé par le fait**
**que** le jeu de contacts de lecture et écriture (59, 78) est fixé sur un chariot correspondant, en étant mobile, au support de carte (26).

7. Système de réception selon la revendication 1,
**caractérisé par le fait**
**que** le support de carte (26) et le jeu de contacts de lecture et écriture (78) sont fixés à un seul et même support (32) et
**que** les contacts à ressort (72, 80) du jeu de contacts de lecture et écriture (78) peuvent être, au moyen d'une force auxiliaire, relevés ou abaissés perpendiculairement à une carte à puce (96) se trouvant dans la position de lecture et écriture.

8. Système de réception selon la revendication 7,
**caractérisé par le fait**
**qu'**il est prévu un organe d'actionnement (81) reliant les extrémités libres des contacts à ressort (79, 80) du jeu de contacts de lecture et écriture (78) et
**qu'**un électro-aimant (86) fixé sur une carte à circuits imprimés (82) est affecté au jeu de contacts de lecture et écriture (78) de manière telle
**que** l'induit (87) de l'électro-aimant (86) est en prise avec l'organe d'actionnement (81).
